# EUROPEAN PATENT SPECIFICATION

(11) **EP 1 502 344 B1**
(45) Date of publication and mention of the grant of the patent: **07.07.2010**
(21) Application number: 03722638.8
(22) Date of filing: 02.05.2003
(51) Int. Cl.: H02K 3/493

(54) **STATOR WINDING OF THE ELECTRIC MOTOR OF AN ELEVATOR MACHINE**
STATORWICKLUNG DES ELEKTROMOTORS EINER HEBMASCHINE
ENROULEMENT DE STATOR POUR MOTEUR ELECTRIQUE D'APPAREIL ELEVATEUR

(30) Priority: 08.05.2002 FI 20020879
(43) Date of publication of application: 02.02.2005
(73) Proprietor: Kone Corporation, 00330 Helsinki (FI)
(72) Inventor: AULANKO, Esko, FIN-04230 Kerava (FI); MUSTALAHTI, Jorma, FIN-05620 Hyvinkää (FI); HUPPUNEN, Jussi, FIN-53850 Lappeenranta (FI)
(74) Representative: Graf Glück Habersack Kritzenberger
(86) International application number: PCT/FI2003/000341
(87) International publication number: WO 2003/096516

(56) References cited:
- EP-A- 0 307 216
- EP-A- 0 398 746
- EP-A- 1 217 714
- WO-A-98/43340
- WO-A-02/082619
- DE-A- 3 612 112
- GB-A- 233 838
- JP-A- 2000 261 998
- JP-A- 2002 281 709

## Description

The present invention relates to a stator of the electric motor of an elevator machine having a stator winding in the stator, said stator having a stator frame provided with stator teeth and slots between them, the stator winding being fitted in said slots.

The stator of electric motors used in elevator machines consists of a stator frame having stator teeth and stator slots between them, and a stator winding arranged in the stator frame around the teeth. The stator frame may be laminated from thin plates forming a stator pack. The conductors of the stator winding are placed directly in the stator slots e. g. as conductor bundles. The conductors are held in the slots by means of slot wedges fitted at the upper edge of the slot. The slot wedges may form a dovetail joint with the upper edge of the slot. A drawback with prior-art stators is a relatively slow and complicated winding process.

In addition, it is necessary to prevent conductor movements in the slots caused by mechanical forces. For this purpose, it may be necessary to apply a sealant between the wedge and the conductors, or else each slot wedge is provided with an adapter piece having friction surfaces on its sides and two side pieces with corresponding friction surfaces on their sides, as described e. g. in patent application FI-A-884154. These solutions are also relatively complicated.

GB 233 838 A discloses a stator according to the preamble of claim 1 wherein strip- or stick-like elements of ferromagnetic material are fitted at the mouths of the slots for controlling the magnetic flux.

The object of the present invention is to achieve a new type of stator with a winding structure that will allow a faster winding process. The mounting structure of the invention is implemented using a plastic winding frame of e. g. trough-like shape, around which the stator winding is fitted. The winding frame comprises a slot stick, preferably of ferromagnetic material, adapted to the shape of the mouth of the slot. The slot stick can be fastened securely by casting it fast on the winding frame. The slot stick can be shaped freely. The features characteristic of the solution of the invention are presented in detail in the claims below.

Since the slot stick is firmly fastened to the coil former, it is not possible for the slot stick to be released. The invention makes it possible to achieve a simple, fast and economical winding process, especially because the windings can be prepared as complete packs before being mounted in the stator slots.

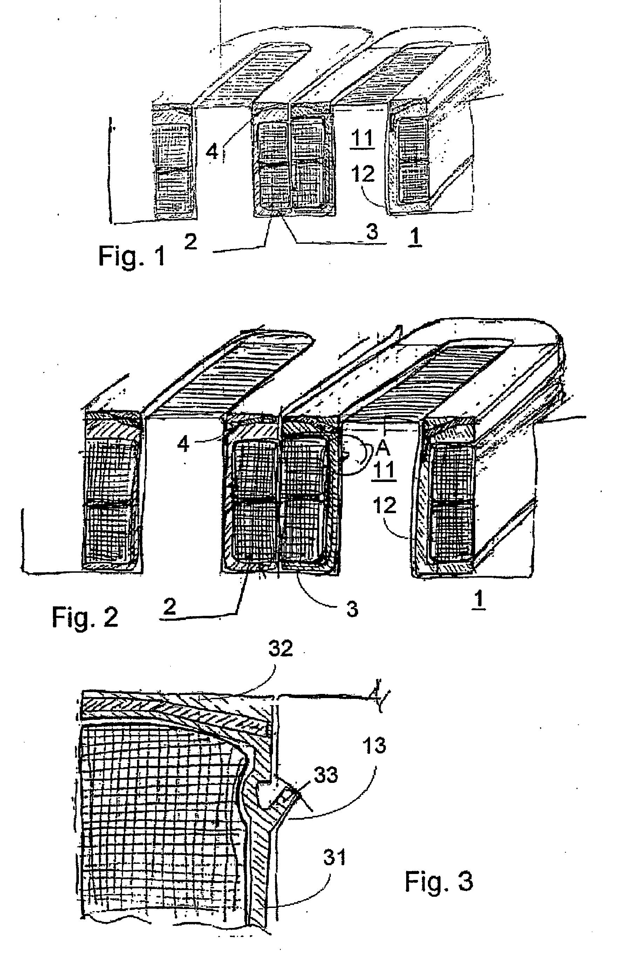

In the following, the invention will be described in detail by the aid of and example with reference to the attached drawings, wherein Fig. 1 presents a stator according to the invention, comprising a plastic winding frame and a slot stick, Fig. 2 presents another stator according to the invention with a plastic winding frame for an electric motor, and Fig. 3 presents a magnified view of detail A in Fig. 2.
Fig. 1 represents the stator of a cage induction motor used as an elevator hoisting motor. The stator consists of a stator frame 1 having stator teeth 11 and stator slots 12 between them. The motor has a stator winding (field pole coil) 2 placed around the stator tooth 11, wound around a trough-like plastic winding frame 3, the bottom 31 of the winding frame 3 being placed against the side face of the tooth 11. The winding frame 3 comprises a slot stick 4 made of ferromagnetic material, extending over the mouth of the slot and adapted to its shape, for controlling the magnetic flux. The slot stick has been cast inside the winding frame 32 on one side of it, so the slot stick 5 is firmly fastened in the winding frame and can not be detached. Before being mounted on the stator slots 12, the windings 2 are fitted in the winding frames 3 to form complete winding packs and then mounted on the stator frame by pushing them into the slots 12.
Fig. 2 and 3 illustrate a second embodiment of the invention, in which the bottom 31 of the winding frame 3 is provided with small elastic locking tongues 33 projecting from the bottom. When the stator winding is being pushed into the slot 12, the locking tongues will snap in into holes 13 provided in the slot of the stator frame. The locking elements 33 thus prevent the field pole coil from moving out from the stator frame.

It is obvious to the person skilled in the art that different embodiments of the invention are not limited to the example described above, but that they may be varied within the scope of the claims presented below.

## Claims

1. Stator of the electric motor of an elevator machine, said stator comprises
- a stator frame (1) provided with stator teeth (11) and slots (12) between them, the stator winding (2) being fitted in said slots (12), and
- strip-like or stick-like elements (4) of ferromagnetic material fitted at the mouths of the slots (12) for controlling the magnetic flux,
**characterized in that** the stator comprises a winding frame (3) having a bottom (31) placed against the slot and sides (32), in which winding frame the winding can be fitted.

2. Stator according to claim 1, **characterized in that** said elements (4) are fitted inside the winding frame.

3. Stator according to claim 1, **characterized in that** said elements (4) are shaped to follow the form of the mouth of the slot.

4. Stator according to claim 1, **characterized in that** the winding frame comprises flexible locking elements (33) projecting from the bottom, which locking elements can be fitted into holes (13) provided in the slots and which, when the winding frame is being pushed into the slot, are inserted into the holes and lock the winding frame and the stator winding to the stator frame.

5. Stator according to claim 1, **characterized in that** the winding frame (3) is substantially trough-like.

6. Stator according to claim 1, **characterized in that** the winding frame (3) is made of a plastic-like material.

7. Stator according to claim 1 or 4, **characterized in that** the locking elements (33) are of the same material as the winding frame.

## Patentansprüche

1. Stator des elektrischen Motors einer Aufzugsmaschine, welcher Stator folgende Merkmale umfasst:
- einen Statorrahmen (1), der mit Statorzähnen (11) und dazwischen angeordneten Schlitzen (12) versehen ist, wobei die Statorwicklung (2) in diesen Schlitzen (12) aufgenommen ist, und
- Streifen- oder stiftartige Elemente (4) aus ferromagnetischen Material, die an den Mündungen der Schlitze (11) vorgesehen sind, um den magnetischen Fluss zu steuern, **dadurch gekennzeichnet, dass** der Stator einen Wicklungsrahmen (3) enthält, der einen gegen die Schlitze angeordneten Boden (31) und Seiten (32) aufweist, in welchem Wicklungsrahmen die Wicklung aufgenommen werden kann.

2. Stator nach Anspruch 1, **dadurch gekennzeichnet, dass** die Elemente (4) innerhalb des Wicklungsrahmens aufgenommen sind.

3. Stator nach Anspruch 1, **dadurch gekennzeichnet, dass** die Elemente (4) derart geformt sind, dass sie der Form der Mündung der Schlitze folgen.

4. Stator nach Anspruch 1, **dadurch gekennzeichnet, dass** der Wicklungsrahmen flexible Verriegelungselemente (33) enthält, die von dem Boden abstehen, welche Verriegelungselemente in Löcher (13) aufgenommen werden können, die in den Schlitzen vorgesehen sind und welche, wenn der Wicklungsrahmen in den Schlitz gedrückt wird, in die Löcher hineinragen und den Wicklungsrahmen und die Statorwicklung an dem Statorrahmen festlegen.

5. Stator nach Anspruch 1, **dadurch gekennzeichnet, dass** der Wicklungsrahmen (3) im Wesentlichen trogförmig ist.

6. Stator nach Anspruch 1, **dadurch gekennzeichnet, dass** der Wicklungsrahmen (3) aus einem plastikartigen Material besteht.

7. Stator nach Anspruch 1 oder 4, **dadurch gekennzeichnet, dass** die Verriegelungselemente (33) aus dem gleichen Material wie der Wicklungsrahmen bestehen.

## Revendications

1. Stator de moteur électrique d'appareil élévateur, ledit stator comprenant :
- un bâti (1) comportant des dents (11) séparées par des fentes (12), l'enroulement du stator (2) s'ajustant dans ces fentes (12), et
- des éléments en matière ferromagnétique en forme de bande ou de bâtons (4) s'adaptant aux embouchures des fentes (12) de façon à contrôler le flux magnétique, **caractérisé par le fait que** le stator comprend un bâti d'enroulement (3) ayant un fond (31) tourné vers la fente et les côtés (32), l'enroulement s'ajustant dans le bâti d'enroulement.

2. Stator selon la revendication 1, **caractérisé par le fait que** lesdits éléments (4) sont ajustés à l'intérieur du bâti d'enroulement.

3. Stator selon la revendication 1, **caractérisé par le fait que** lesdits éléments (4) sont formés de manière à suivre la forme de l'embouchure de la fente.

4. Stator selon la revendication 1, **caractérisé par le fait que** le bâti d'enroulement comprend des éléments de verrouillage flexibles (33) en saillie par rapport au fond, les éléments de verrouillage pouvant être ajustés dans des trous (13) disposés dans les fentes et qui, quand le bâti d'enroulement est poussé dans la fente, s'insèrent dans les trous et verrouillent le bâti d'enroulement et le stator au bâti de stator.

5. Stator selon la revendication 1, **caractérisé par le fait que** le bâti d'enroulement (3) est essentiellement en forme d'auge.

6. Stator selon la revendication 1, **caractérisé par le fait que** le bâti d'enroulement (3) est constitué de matériau de type matière plastique.

7. Stator selon la revendication 1 ou 4, **caractérisé par le fait que** les éléments de verrouillage (33) sont constitués du même matériau que le bâti d'enroulement.
